# EUROPEAN PATENT APPLICATION

(11) **EP 4 541 494 A1**
(43) Date of publication of application: **23.04.2025**
(21) Application number: 22953068.8
(22) Date of filing: 27.07.2022
(51) Int. Cl.: B23H 7/06, B23H 7/20

(54) **WIRE ELECTRICAL DISCHARGE MACHINE CONTROL DEVICE, AND DISPLAY METHOD**

(71) Applicant: FANUC CORPORATION, Oshino-mura Minamitsuru-gun Yamanashi 401-0597 (JP)
(72) Inventor: KUBOTA, Riho, Minamitsuru-gun, Yamanashi 401-0597 (JP); ABE, Hiroyuki, Minamitsuru-gun, Yamanashi 401-0597 (JP)
(74) Representative: Keil & Schaafhausen Patentanwälte PartGmbB
(86) International application number: PCT/JP2022/028949
(87) International publication number: WO 2024/023973

(57) **Abstract**

According to an embodiment of the present disclosure, a control device (20) of a wire electrical discharge machine (10) comprises: a first rendering control unit (162) for rendering a machining pathway (RA) on a display device (124), using an electrode position (EP) of a wire electrode (60) as a display position of a start position (SA) of the machining pathway; a storage control unit (158) for storing the display position of the start position in a storage device (122); and a second rendering control unit (164) for re-rendering the machining pathway on the display device, using the display position stored in the storage device as the start position.

## Description

### TECHNICAL FIELD

The present disclosure relates to a control device and a display method for a wire electrical discharge machine (a wire electrical discharge machine control device, and a display method).

### BACKGROUND ART

JP 2012-083999 A discloses a machine tool that restarts interrupted machining after completion of interruption machining.

### SUMMARY OF THE INVENTION

There is room for improvement in redrawing of machining paths when machining is restarted after machining is interrupted.

A first aspect of the present invention is directed to a control device for a wire electrical discharge machine in which an electrical discharge machining is performed on a workpiece by moving a wire electrode relative to the workpiece, the control device including a first drawing control unit configured to display an electrode position of the wire electrode present at a starting position of a machining path and draw on a display device the machining path with a display position of the electrode position as a display position of the starting position, before the wire electrical discharge machine performs a first electrical discharge machining on a first workpiece along the machining path, a storage control unit configured to store in a storage device the display position of the starting position when the machining path is drawn, in a case that an interruption request for instructing a second electrical discharge machining for a second workpiece has been made before the first electrical discharge machining is completed, and a second drawing control unit configured to redraw on the display device the machining path with the display position stored in the storage device as the starting position, in a case that the wire electrical discharge machine restarts the first electrical discharge machining after the second electrical discharge machining has been completed.

A second aspect of the present disclosure is directed to a display method for a wire electrical discharge machine in which an electrical discharge machining is performed on a workpiece by moving a wire electrode relative to the workpiece, the method including a first drawing step of displaying an electrode position of the wire electrode present at a starting position of a machining path and drawing on a display device the machining path with a display position of the electrode position as a display position of the starting position, before the wire electrical discharge machine performs a first electrical discharge machining on a first workpiece along the machining path, a storage step of storing in a storage device the display position of the starting position when the machining path is drawn, in a case that an interruption request for instructing a second electrical discharge machining for a second workpiece has been made before the first electrical discharge machining is completed, and a second drawing step of redrawing on the display device the machining path with the display position stored in the storage device as the starting position, in a case that the wire electrical discharge machine restarts the first electrical discharge machining after the second electrical discharge machining has been completed.

### BRIEF DESCRIPTION OF DRAWINGS

[FIG. 1] FIG. 1 is a schematic diagram illustrating a wire electrical discharge machine and a control device therefor;
[FIG. 2] FIG. 2 is a block diagram illustrating a configuration of the wire electrical discharge machine and the control device;
[FIG. 3] FIG. 3 is a view illustrating a first workpiece and a second workpiece on a table;
[FIG. 4] FIG. 4 is a diagram illustrating a machining path of a first electrical discharge machining for the first workpiece drawn on a display device;
[FIG. 5] FIG. 5 is a diagram illustrating a trajectory of the first electrical discharge machining drawn on the display device when the first electrical discharge machining is interrupted;
[FIG. 6] FIG. 6 is a diagram illustrating a machining path of a second electrical discharge machining for a second workpiece, drawn on the display device;
[FIG. 7] FIG. 7 is a diagram illustrating a trajectory of the second electrical discharge machining drawn on the display device when the second electrical discharge machining is completed;
[FIG. 8] FIG. 8 is a diagram illustrating a machining path and a trajectory of the first electrical discharge machining drawn on the display device when the first electrical discharge machining is to be restarted;
[FIG. 9] FIG. 9 is a flowchart illustrating a processing procedure relating to a display method of a wire electrical discharge machine;
[FIG. 10] FIG. 10 is a flowchart illustrating a processing procedure relating to the display method of the wire electrical discharge machine; and
[FIG. 11] FIG. 11 is a flowchart illustrating a processing procedure relating to the display method of the wire electrical discharge machine.

### DETAILED DESCRIPTION OF THE INVENTION

According to a conventional control device and display method for a wire electrical discharge machine, in the case that the machining interruption occurs due to interruption by other machining, a machining path that has been drawn is erased. After the interruption machining is completed, the machining path of the interrupted machining is redrawn. In this case, there is a problem that the machining path is redrawn with the electrode position of the wire electrode after returning to the interruption position as the starting position. Therefore, the operator cannot accurately grasp the machining state after restarting on the redrawn machining path.

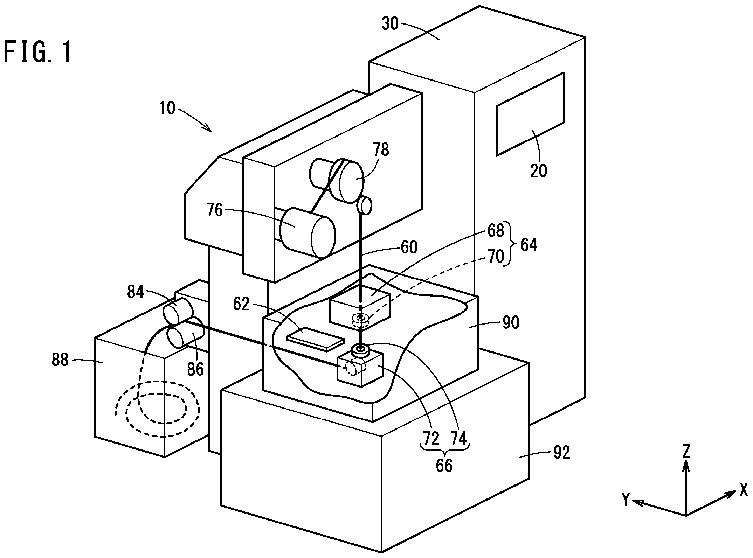

FIG. 1 is a schematic diagram illustrating a wire electrical discharge machine 10 and a control device 20 therefor. An X direction, a Y direction, and a Z direction shown in FIG. 1 are perpendicular to each other, and a -Z direction is the direction of gravity. A workpiece (not shown) is supported by a table 62. A machining power supply 30 applies a voltage to an inter-electrode gap formed between a wire electrode 60 and a workpiece to generate an electrical discharge. The wire electrical discharge machine 10 performs electrical discharge machining of the workpiece by the electrical discharge generated in the inter-electrode gap.

The control device 20 moves the wire electrode 60 relative to the workpiece along a machining path designated by a predetermined program while the electrical discharge machining is performed. The relative movement between the wire electrode 60 and the workpiece is performed by causing the table 62 to be moved, for example.

The wire electrical discharge machine 10 includes an upper wire guide 64, and a lower wire guide 66. The upper wire guide 64 includes an upper guide block 68, an upper die guide 70, and an upper nozzle (not shown). The lower wire guide 66 includes a lower guide block 72, a lower die guide 74, and a lower nozzle (not shown). The upper wire guide 64 supports the wire electrode 60 above the table 62 and the workpiece (in the +Z direction). The lower wire guide 66 supports the wire electrode 60 below the table 62 (in the -Z direction).

The wire electrode 60 is supplied at a predetermined speed from a wire bobbin 76 in a feed direction. The wire electrode 60 is fed out via a roller 78, the upper wire guide 64, the workpiece, and the lower wire guide 66. The wire electrode 60 that has passed through the lower wire guide 66 is sandwiched and gripped by a pinch roller 84 and a feed roller 86. The wire electrode 60 is collected in a collection box 88.

In the case that wire electrical discharge machining is carried out, a work-pan 90 may store a working fluid. In this case, the table 62, the workpiece, the upper wire guide 64, and the lower wire guide 66 are immersed in the working fluid. The work-pan 90 is installed on a bed 92. The working fluid is ejected from an upper nozzle of the upper wire guide 64 and a lower nozzle of the lower wire guide 66 into the inter-electrode gap.

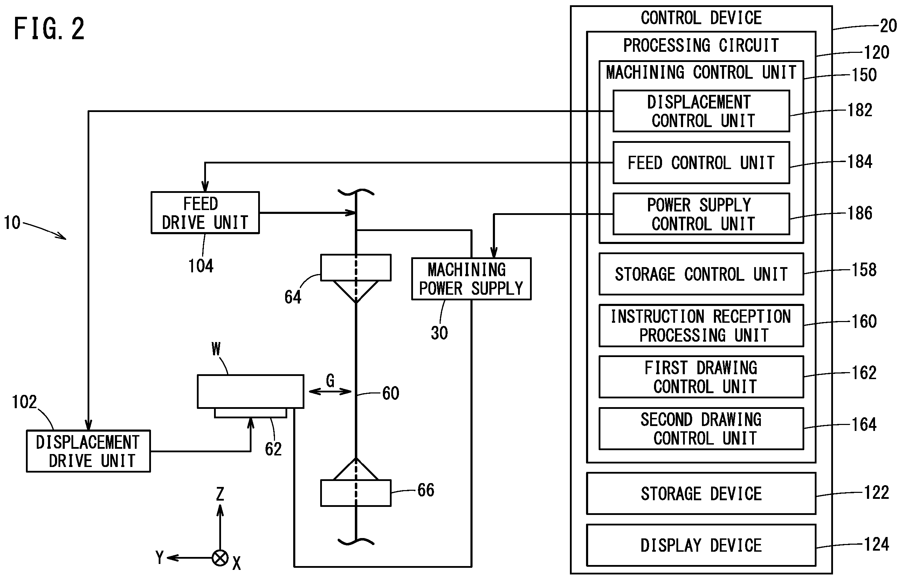

FIG. 2 is a block diagram illustrating a configuration of the wire electrical discharge machine 10 and the control device 20. FIG. 2 shows only a part of the configuration of the wire electrical discharge machine 10 relating to machining control. The wire electrical discharge machine 10 has a displacement drive unit 102 and a feed drive unit 104, which are not shown in FIG. 1. In FIG. 2, a workpiece W is mounted on the table 62. The machining power supply 30 repeatedly applies a pulse voltage to an inter-electrode gap G formed between the wire electrode 60 and the workpiece W

The displacement drive unit 102 drives the table 62. With the above configuration, it is possible to move the wire electrode 60 relative to the workpiece W in the X direction and the Y direction. The displacement drive unit 102 includes an X motor, a Y motor, an X drive transmission mechanism, and a Y drive transmission mechanism. The X motor is a motor in order to cause the table 62 to be moved in the X direction. The Y motor is a motor in order to cause the table 62 to be moved in the Y direction.

The X drive transmission mechanism is a mechanism for the purpose of converting the rotational motion of the X motor into linear motion of the table 62 in the X direction. The Y drive transmission mechanism is a mechanism for the purpose of converting the rotational motion of the Y motor into linear motion of the table 62 in the Y direction. Each of the X drive transmission mechanism and the Y drive transmission mechanism is constituted by a ball screw, a nut, and the like. Moreover, it should be noted that each of the X motor and the Y motor is provided with an encoder (a rotational position detection sensor) that detects the rotational position.

The feed drive unit 104 has the roller 78 shown in FIG. 1 and a feeding motor (not shown). The feeding motor causes the roller 78 to rotate. An encoder (a rotational position detection sensor) that detects the rotational position thereof is provided on the feeding motor. By undergoing rotation, the roller 78 feed out the wire electrode 60 that is wound around the wire bobbin 76 with respect to the workpiece **W.**

The control device 20 includes a processing circuit 120, a storage device 122, and a display device 124. The processing circuit 120 includes a processor such as a CPU or a GPU or the like. The storage device 122 includes a volatile memory such as a RAM or the like, and a nonvolatile memory such as a ROM, a flash memory or the like. The volatile memory is used as a working memory of the processor. The nonvolatile memory stores a program executed by the processor and other necessary data. The storage device 122 also stores a machining program for electrical discharge machining. A machining path is drawn on the display device 124. The display device 124 may be provided outside the control device 20.

The processing circuit 120 includes a machining control unit 150, a storage control unit 158, an instruction reception processing unit 160, a first drawing control unit 162, and a second drawing control unit 164. The machining control unit 150 includes a displacement control unit 182, a feed control unit 184, and a power supply control unit 186. The processing circuit 120 executes the program saved in the storage device 122, thereby realizing the machining control unit 150, the storage control unit 158, the instruction reception processing unit 160, the first drawing control unit 162, and the second drawing control unit 164.

At least a portion of any of the machining control unit 150, the storage control unit 158, the instruction reception processing unit 160, the first drawing control unit 162, and the second drawing control unit 164 may be realized by an integrated circuit such as an ASIC or an FPGA, or an electronic circuit including a discrete device.

The machining control unit 150 reads out the machining program from the storage device 122 and performs electrical discharge machining on the workpiece W along the machining path based on the machining program.

The displacement control unit 182 controls the displacement drive unit 102 to drive the table 62. As a result, the wire electrode 60 is moved relative to the workpiece **W.** In this way, the displacement control unit 182 can displace the electrode position of the wire electrode 60. For example, the displacement control unit 182 moves the electrode position of the wire electrode 60 to the starting position of the machining path.

The feed control unit 184 controls the feed drive unit 104 to rotate the roller 78. As a result, the wire electrode 60 is fed to the workpiece **W.** The power supply control unit 186 controls the machining power supply 30, and thereby applies a voltage to the inter-electrode gap **G.** The machining control unit 150 performs electrical discharge machining on the workpiece W from the starting position along the machining path, based on the control processing of the displacement control unit 182, the feed control unit 184, and the power supply control unit 186.

The first drawing control unit 162 displays the electrode position of the wire electrode 60. Before the electrical discharge machining is performed on the workpiece **W,** the first drawing control unit 162 draws a machining path of the electrical discharge machining on the display device 124. The machining path is drawn with the electrode position as the starting position of the machining path.

The instruction reception processing unit 160 receives an instruction from an operator via an operation device (not shown). It is assumed that, before electrical discharge machining of the workpiece W is completed, the instruction reception processing unit 160 receives an interruption request for instructing electrical discharge machining of another workpiece. In this case, the machining control unit 150 interrupts the electrical discharge machining of the workpiece **W.**

The storage control unit 158 stores in the storage device 122 the display position of the starting position when the machining path was drawn. The storage control unit 158 stores in the storage device 122 the display position of the electrode position of the wire electrode 60 displayed on the display device 124 when the electrical discharge machining was interrupted, as a display position of an interruption position where the electrical discharge machining was interrupted. Further, the storage control unit 158 stores in the storage device 122 the trajectory of the electrical discharge machining, ranging from the display position of the starting position of the machining path to the display position of the interruption position of the electrical discharge machining.

When the electrical discharge machining of the workpiece **W,** which has been interrupted in response to the interruption request, is restarted, the displacement control unit 182 displaces the electrode position of the wire electrode 60 to the interruption position where the electrical discharge machining has been interrupted. When the electrode position is displaced to the interruption position, the second drawing control unit 164 redraws the machining path. The second drawing control unit 164 redraws the machining path by using the display position of the starting position stored in the storage device 122 as the starting position for redrawing.

The second drawing control unit 164 redraws the trajectory of the electrical discharge machining stored in the storage device 122, such that the trajectory is superimposed on the redrawn machining path. The second drawing control unit 164 displays the display position of the interruption position stored in the storage device 122. As described above, the electrode position of the wire electrode 60 is disposed at the interruption position of the electrical discharge machining. Therefore, the electrode position is displayed at the display position of the interruption position.

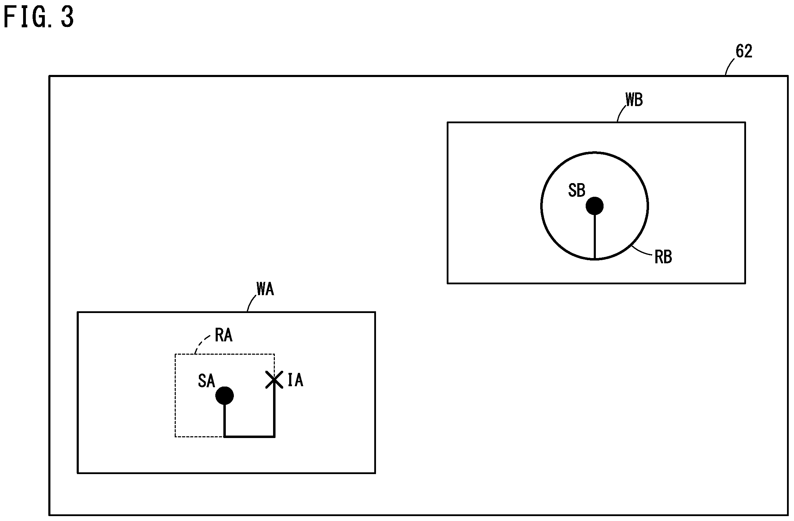

FIG. 3 is a view illustrating the first workpiece WA and the second workpiece WB on the table 62. Initially, the first electrical discharge machining of the first workpiece WA is started from the starting position SA and is performed along the machining path **RA.** Before the first electrical discharge machining is completed, an interruption request for instructing the second electrical discharge machining to the second workpiece WB is received. In response to the interruption request, the first electrical discharge machining is interrupted at the interruption position IA on the machining path **RA.**

The wire electrode 60 is moved to a starting position SB of the second electrical discharge machining. When the connection of the wire electrode 60 is completed, the second electrical discharge machining is started from the starting position SB and is performed along the machining path RB. When the first electrical discharge machining is restarted after the second electrical discharge machining is completed, the wire electrode 60 is moved to the interruption position IA of the first electrical discharge machining. When the connection of the wire electrode 60 is completed, the first electrical discharge machining is restarted from the interruption position IA and is performed along the machining path **RA.**

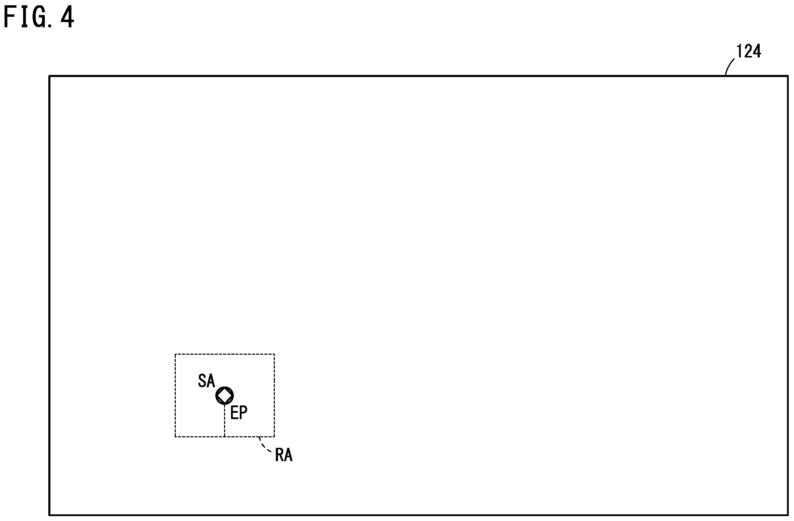

FIG. 4 is a diagram illustrating the machining path RA of the first electrical discharge machining for the first workpiece WA drawn on the display device 124. Before the first electrical discharge machining is performed on the first workpiece WA, the first drawing control unit 162 of the control device 20 draws the machining path RA of the first electrical discharge machining on the display device 124. The electrode position EP of the wire electrode 60 is present at the starting position SA of the machining path **RA.** The machining path RA is drawn with the display position of the electrode position EP as the display position of the starting position SA.

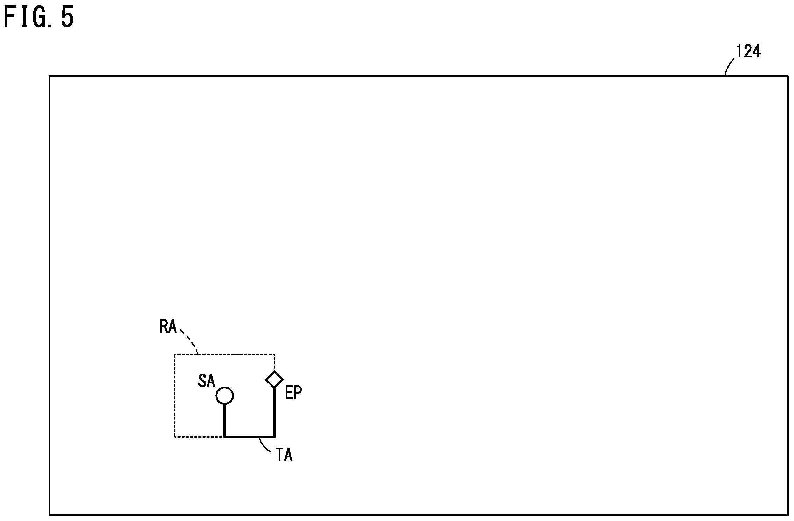

After the first electrical discharge machining is started, the displacement control unit 182 displaces the electrode position EP of the wire electrode 60 along the machining path **RA.** During the displacement, the first electrical discharge machining is performed by the feed drive unit 104 feeding the wire electrode 60 and the machining power supply 30 applying a voltage to the inter-electrode gap G If an interruption request for instructing the second electrical discharge machining is made before the completion of the first electrical discharge machining, the first electrical discharge machining is interrupted. FIG. 5 is a diagram illustrating a trajectory TA of the first electrical discharge machining drawn on the display device 124 when the first electrical discharge machining is interrupted. The display position of the electrode position EP of the wire electrode 60 shown in FIG. 5 corresponds to the interruption position IA where the first electrical discharge machining is interrupted in response to the interruption request.

The first drawing control unit 162 draws on the display device 124 the trajectory TA of the first electrical discharge machining, ranging from the display position of the starting position SA of the first electrical discharge machining to the display position of the interruption position IA (the display position of the electrode position EP). The trajectory TA of the first electrical discharge machining corresponds to a section on the machining path RA where the first electrical discharge machining is performed on the first workpiece **WA.**

The storage control unit 158 stores in the storage device 122 the display position of the starting position SA of the machining path RA drawn by the first drawing control unit 162. The storage control unit 158 stores in the storage device 122 the display position of the electrode position EP of the wire electrode 60, as the display position of the interruption position IA of the first electrical discharge machining in response to the interruption request. The storage control unit 158 further stores the trajectory TA in the storage device 122.

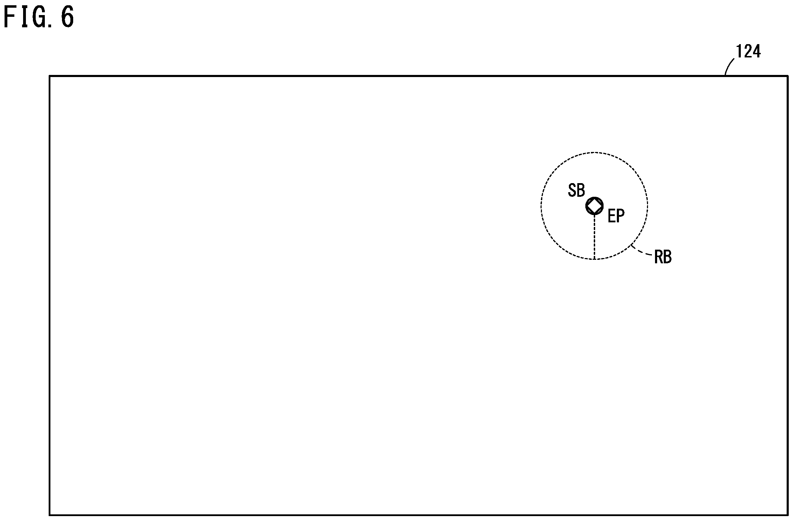

The displacement control unit 182 displaces the electrode position EP of the wire electrode 60 to the starting position SB of the second electrical discharge machining. The first drawing control unit 162 displays the electrode position EP of the wire electrode 60 at the display position of the starting position SB of the second electrical discharge machining. The first drawing control unit 162 erases the machining path RA, the starting position SA, and the trajectory TA of the first electrical discharge machining. The first drawing control unit 162 draws on the display device 124 the machining path RB of the second electrical discharge machining. FIG. 6 is a diagram illustrating the machining path RB of the second electrical discharge machining for the second workpiece WB, drawn on the display device 124. The electrode position EP of the wire electrode 60 is present at the starting position SB of the machining path RB. The machining path RB is drawn with the display position of the electrode position EP as the display position of the starting position SB.

After the second electrical discharge machining is started, the displacement control unit 182 displaces the electrode position EP of the wire electrode 60 along the machining path RB. During the displacement, the second electrical discharge machining is performed by the feed drive unit 104 feeding the wire electrode 60 and the machining power supply 30 applying a voltage to the inter-electrode gap G. When the second electrical discharge machining is performed over the entire section of the machining path RB, the second electrical discharge machining is completed.

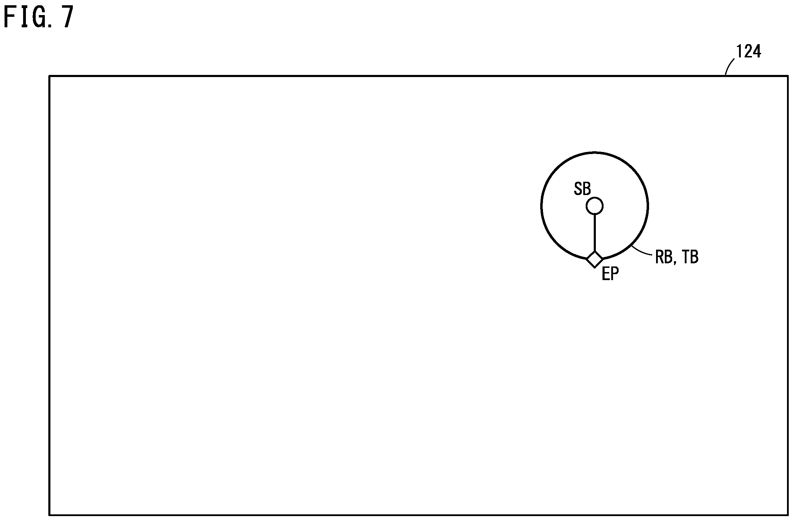

FIG. 7 is a diagram illustrating the trajectory TB of the second electrical discharge machining drawn on the display device 124 when the second electrical discharge machining is completed. The trajectory TB of the second electrical discharge machining coincides with the entire section of the machining path RB. The first drawing control unit 162 draws on the display device 124 the trajectory TB of the second electrical discharge machining.

The displacement control unit 182 displaces the electrode position EP of the wire electrode 60 to the interruption position IA of the first electrical discharge machining in order to restart the interrupted first electrical discharge machining of the first workpiece WA. The second drawing control unit 164 displays the electrode position EP of the wire electrode 60 at the display position of the interruption position IA of the first electrical discharge machining. The second drawing control unit 164 erases the machining path RB, the starting position SB, and the trajectory TB of the second electrical discharge machining.

The second drawing control unit 164 reads out from the storage device 122 the display position, which is stored in the storage device 122, of the starting position SA of the machining path RA. The second drawing control unit 164 redraws the machining path RA on the display device 124, with the display position as the starting position SA for redrawing. In accordance with such a feature, the operator can visually grasp the machining state after restarting, on the redrawn machining path RA.

The second drawing control unit 164 reads out from the storage device 122 the display position of the interruption position IA of the first electrical discharge machining in response to the interruption request and the trajectory TA of the first electrical discharge machining. The second drawing control unit 164 displays on the display device 124 the interruption position IA of the first electrical discharge machining, such that the interruption position IA is superimposed on the machining path RA. The second drawing control unit 164 redraws on the display device 124 the trajectory TA of the first electrical discharge machining, such that the trajectory TA is superimposed on the machining path RA. In accordance with such a feature, the operator can visually grasp the machining state before interruption, on the redrawn machining path RA.

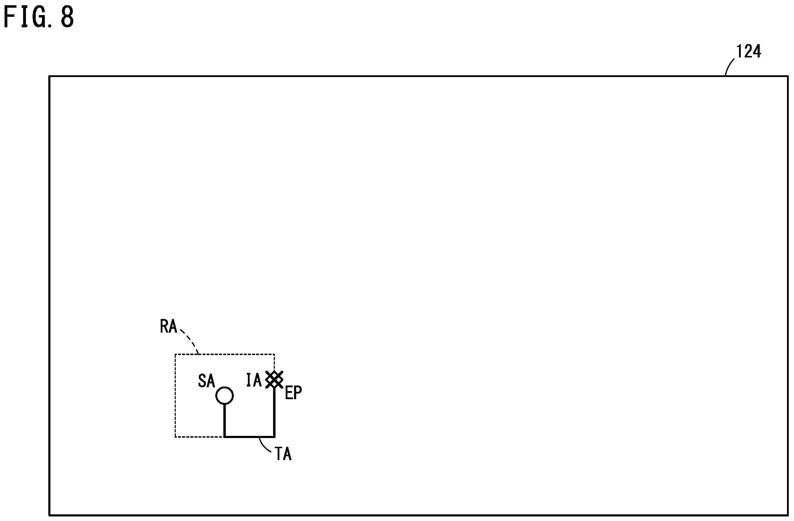

FIG. 8 is a diagram illustrating the machining path RA and the trajectory TA of the first electrical discharge machining drawn on the display device 124 when the first electrical discharge machining is to be restarted. The electrode position EP of the wire electrode 60 is present at the interruption position IA of the first electrical discharge machining in response to the interruption request, on the machining path **RA.** Therefore, the electrode position EP is displayed at the display position of the interruption position IA. Thus, the operator can visually confirm that the machining path RA is correctly redrawn and that the electrode position EP is present at the interruption position IA.

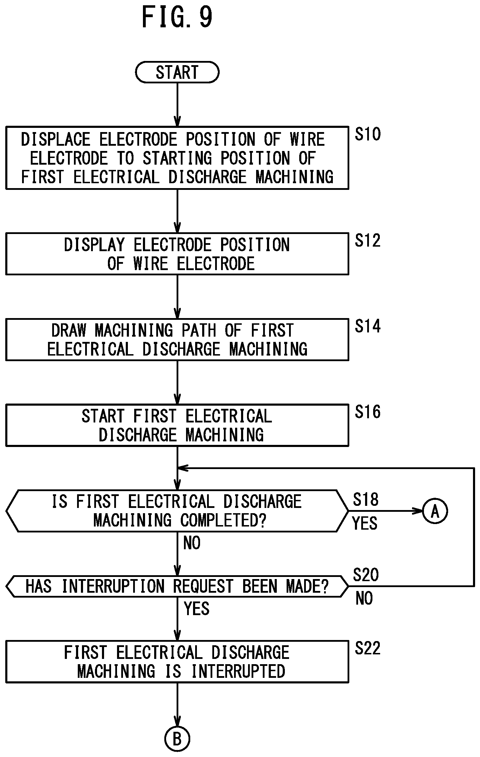

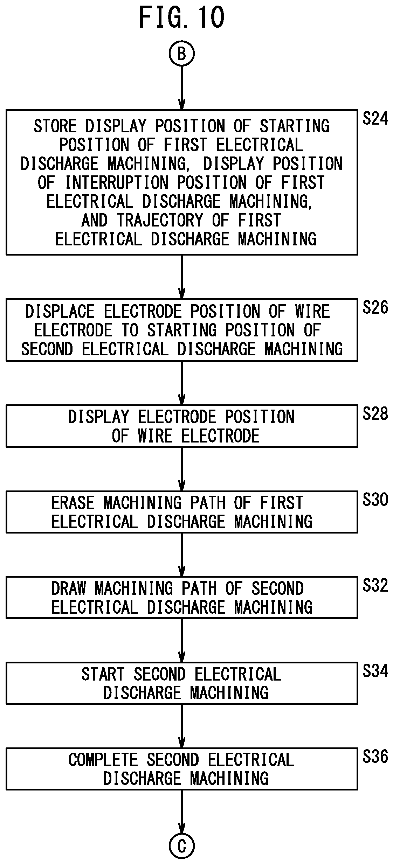

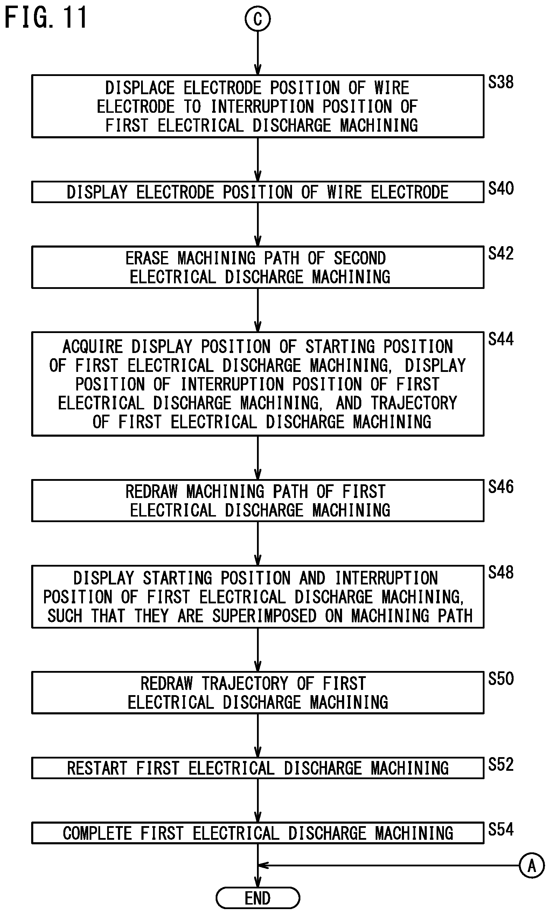

FIGS. 9, 10, and 11 are flowcharts each illustrating a processing procedure relating to the display method of the wire electrical discharge machine 10. The present processing procedure is performed, for example, by the processing circuit 120 of the control device 20 executing the computation program saved in the storage device 122. When the present processing procedure is started, in step S10, the displacement control unit 182 displaces the electrode position EP of the wire electrode 60 to the starting position SA of the first electrical discharge machining.

In step S12, the first drawing control unit 162 displays the electrode position EP of the wire electrode 60 on the display device 124. In step S14, the first drawing control unit 162 draws the machining path RA of the first electrical discharge machining and the starting position SA of the machining path RA, on the display device 124. In step S16, the machining control unit 150 starts the first electrical discharge machining based on the control by the displacement control unit 182, the feed control unit 184, and the power supply control unit 186, according to the machining program.

In step S18, the machining control unit 150 determines whether or not the first electrical discharge machining is completed. When the execution of the machining program for the first electrical discharge machining is completed, the result of the determination in step S18 is YES. In the case that the execution of the machining program for the first electrical discharge machining is not completed, the result of the determination in step S18 is NO. If the result becomes YES in step S18, the present processing procedure comes to an end. If the result becomes NO in step S18, the present processing procedure proceeds to step S20.

In step S20, the instruction reception processing unit 160 determines whether or not an interruption request for instructing the second electrical discharge machining has been received from the operator. If the result becomes NO in step S20, the processing procedure returns to step S18. If the result becomes YES in step S20, the present processing procedure proceeds to step S22.

In step S22, the machining control unit 150 interrupts execution of the machining program for the first electrical discharge machining. As a result, the first electrical discharge machining is interrupted. The first drawing control unit 162 has drawn on the display device 124 the trajectory TA of the first electrical discharge machining, such that the trajectory TA is superimposed on the machining path RA. The first drawing control unit 162 displays on the display device 124 the electrode position EP of the wire electrode 60 as the interruption position IA of the first electrical discharge machining.

In step S24, the storage control unit 158 stores in the storage device 122 the display position of the starting position SA of the machining path RA, the display position of the interruption position IA of the first electrical discharge machining, and the trajectory TA of the first electrical discharge machining. In step S26, the displacement control unit 182 displaces the electrode position EP of the wire electrode 60 to the starting position SB of the second electrical discharge machining. In step S28, the first drawing control unit 162 displays the electrode position EP of the wire electrode 60 on the display device 124.

In step S30, the first drawing control unit 162 erases the machining path RA, the starting position SA, the interruption position IA, and the trajectory TA of the first electrical discharge machining, from the display device 124. In step S32, the first drawing control unit 162 draws on the display device 124 the machining path RB of the second electrical discharge machining and the starting position SB of the machining path RB.

In step S34, the machining control unit 150 starts the second electrical discharge machining based on the control by the displacement control unit 182, the feed control unit 184, and the power supply control unit 186, according to the machining program. In step S36, the machining control unit 150 completes execution of the machining program for the second electrical discharge machining. The second electrical discharge machining is completed. The first drawing control unit 162 has drawn on the display device 124 the trajectory TB of the second electrical discharge machining, such that the trajectory TB is superimposed on the machining path RB.

In step S38, the displacement control unit 182 displaces the electrode position EP of the wire electrode 60 to the interruption position IA of the first electrical discharge machining. In step S40, the second drawing control unit 164 displays the electrode position EP of the wire electrode 60 on the display device 124. The second drawing control unit 164 displays the interruption position IA of the first electrical discharge machining on the display device 124. The interruption position IA is displayed at the display position of the electrode position EP.

In step S42, the second drawing control unit 164 erases the machining path RB, the starting position SB, and the trajectory TB of the second electrical discharge machining, from the display device 124. In step S44, the second drawing control unit 164 acquires from the storage device 122 the display position of the starting position SA of the machining path RA, the display position of the interruption position IA of the first electrical discharge machining, and the trajectory TA of the first electrical discharge machining. Based on the content acquired in step S44, the processing of steps S46, S48, and S50 is performed.

In step S46, the second drawing control unit 164 redraws on the display device 124 the machining path RA of the first electrical discharge machining. In step S48, the second drawing control unit 164 displays on the display device 124 the starting position SA of the machining path RA and the interruption position IA of the first electrical discharge machining, such that the starting position SA and the interruption position IA are superimposed on the machining path **RA.** In step S50, the second drawing control unit 164 redraws on the display device 124 the trajectory TA from the start to the interruption of the first electrical discharge machining.

In step S52, the machining control unit 150 restarts the first electrical discharge machining based on the control by the displacement control unit 182, the feed control unit 184, and the power supply control unit 186, according to the machining program. In step S54, the machining control unit 150 completes execution of the machining program for the first electrical discharge machining. The first electrical discharge machining is completed. The second drawing control unit 164 has drawn on the display device 124 the trajectory from the interruption position IA to the end position of the first electrical discharge machining, such that the trajectory is superimposed on the machining path RA and continues to the trajectory TA. When the process of step S54 is completed, the present processing procedure comes to an end.

With respect to the above embodiment, the following supplementary notes are further disclosed.

### (Supplementary Note 1)

In the control device (20) for the wire electrical discharge machine (10) in which the electrical discharge machining is performed on the workpiece (W) by moving the wire electrode (60) relative to the workpiece, the control device includes the first drawing control unit (162) configured to display the electrode position (EP) of the wire electrode present at the starting position (SA) of the machining path (RA) and draw on the display device (124) the machining path with the display position of the electrode position as the display position of the starting position, before the wire electrical discharge machine performs the first electrical discharge machining on the first workpiece (WA) along the machining path, the storage control unit (158) configured to store in the storage device (122) the display position of the starting position when the machining path is drawn, in the case that an interruption request for instructing the second electrical discharge machining for the second workpiece (WB) has been made before the first electrical discharge machining is completed, and the second drawing control unit (164) configured to redraw on the display device the machining path with the display position stored in the storage device as the starting position, in the case that the wire electrical discharge machine restarts the first electrical discharge machining after the second electrical discharge machining has been completed. In accordance with such a feature, the operator can visually grasp the machining state after restarting, on the redrawn machining path.

### (Supplementary Note 2)

In the control device according to Supplementary Note 1, in the case that the interruption request has been made, the storage control unit may store in the storage device the display position of the starting position and the trajectory (TA) of the first electrical discharge machining ranging from the display position of the starting position to the display position of the interruption position (IA) of the first electrical discharge machining interrupted in response to the interruption request, and the second drawing control unit may redraw on the display device the trajectory of the first electrical discharge machining stored in the storage device, in the manner so that the trajectory of the first electrical discharge machining is superimposed on the machining path that has been redrawn. In accordance with such a feature, the operator can visually grasp the machining state before interruption, on the redrawn machining path.

### (Supplementary Note 3)

The control device for the wire electrical discharge machine according to Supplementary Note 1 or **2,** may further include the displacement control unit (182) configured to displace the electrode position to the interruption position (IA) of the first electrical discharge machining interrupted in response to the interruption request, after the second electrical discharge machining has been completed, wherein the storage control unit may store in the storage device the display position of the starting position and the display position of the interruption position, in the case that the interruption request has been made, and when the electrode position has moved to the interruption position, the second drawing control unit may display on the display device the display position of the interruption position stored in the storage device as the display position of the electrode position, in the manner so that the display position of the interruption position is superimposed on the machining path that has been redrawn. In accordance with such a feature, the operator can visually confirm that the machining path is correctly redrawn and that the electrode position is present at the interruption position.

### (Supplementary Note 4)

In the display method for the wire electrical discharge machine (10) in which the electrical discharge machining is performed on the workpiece (W) by moving the wire electrode (60) relative to the workpiece, the method includes the first drawing step of displaying an electrode position (EP) of the wire electrode present at the starting position (SA) of the machining path (RA) and drawing on the display device (124) the machining path with the display position of the electrode position as the display position of the starting position, before the wire electrical discharge machine performs the first electrical discharge machining on the first workpiece (WA) along the machining path, the storage step of storing in the storage device (122) the display position of the starting position when the machining path is drawn, in the case that the interruption request for instructing the second electrical discharge machining for the second workpiece (WB) has been made before the first electrical discharge machining is completed, and the second drawing step of redrawing on the display device the machining path with the display position stored in the storage device as the starting position, in the case that the wire electrical discharge machine restarts the first electrical discharge machining after the second electrical discharge machining has been completed. In accordance with such a feature, the operator can visually grasp the machining state after restarting, on the redrawn machining path.

### (Supplementary Note 5)

In the display method described in Supplementary Note 4, in the storage step, the display position of the starting position and the trajectory (TA) of the first electrical discharge machining may be stored in the storage device in the case that the interruption request has been made, the trajectory of the first electrical discharge machining ranging from the display position of the starting position to the display position of the interruption position (IA) of the first electrical discharge machining interrupted in response to the interruption request, and in the second drawing step, the trajectory of the first electrical discharge machining stored in the storage device may be redrawn on the display device, in the manner so that the trajectory of the first electrical discharge machining is superimposed on the machining path that has been redrawn. In accordance with such a feature, the operator can visually grasp the machining state before interruption, on the redrawn machining path.

### (Supplementary Note 6)

The display method described in Supplementary Note 4 or 5 may further include the displacement step of displacing the electrode position to the interruption position (IA) of the first electrical discharge machining interrupted in response to the interruption request, after the second electrical discharge machining has been completed, wherein in the storage step, the display position of the starting position and the display position of the interruption position may be stored in the storage device, in the case that the interruption request has been made, and when the electrode position has moved to the interruption position, in the second drawing step, the display position of the interruption position stored in the storage device may be displayed on the display device as the display position of the electrode position, in the manner so that the display position of the interruption position is superimposed on the machining path that has been redrawn. In accordance with such a feature, the operator can visually confirm that the machining path is correctly redrawn and that the electrode position is present at the interruption position.

Although the embodiments of the present disclosure have been described in detail, the present disclosure is not limited to the embodiments described above. Within a range that does not depart from the essence and gist of the present invention, or within a range that does not depart from the idea and purpose of the present invention derived from the content described in the claims and their equivalents, various additions, substitutions, changes, partial deletions, or the like can be made to such embodiments. For example, in the embodiments described above, the order of each of the operations and the order of each of the processes are shown as examples, and the present invention is not limited to such operations and processes.

### REFERENCE SIGNS LIST

10...wire electrical discharge machine
20...control device
30...machining power supply
60...wire electrode
62...table
64...upper wire guide
66...lower wire guide
68...upper guide block
70...upper die guide
72...lower guide block
74...lower die guide
76...wire bobbin
78...roller
84...pinch roller
86...feed roller
88...collection box
90...work-pan
92...bed
102...displacement drive unit
104...feed drive unit
120...processing circuit
122...storage device
124...display device
150...machining control unit
158...storage control unit
160...instruction reception processing unit
162...first drawing control unit
164...second drawing control unit
182...displacement control unit
184...feed control unit
186...power supply control unit

## Claims

1. A control device (20) for a wire electrical discharge machine (10) in which an electrical discharge machining is performed on a workpiece (W) by moving a wire electrode (60) relative to the workpiece, the control device comprising:
a first drawing control unit (162) configured to display an electrode position (EP) of the wire electrode present at a starting position (SA) of a machining path (RA) and draw on a display device (124) the machining path with a display position of the electrode position as a display position of the starting position, before the wire electrical discharge machine performs a first electrical discharge machining on a first workpiece (WA) along the machining path;
a storage control unit (158) configured to store in a storage device (122) the display position of the starting position when the machining path is drawn, in a case that an interruption request for instructing a second electrical discharge machining for a second workpiece (WB) has been made before the first electrical discharge machining is completed; and
a second drawing control unit (164) configured to redraw on the display device the machining path with the display position stored in the storage device as the starting position, in a case that the wire electrical discharge machine restarts the first electrical discharge machining after the second electrical discharge machining has been completed.

2. The control device for the wire electrical discharge machine according to claim 1,
wherein, in the case that the interruption request has been made, the storage control unit stores in the storage device the display position of the starting position and a trajectory (TA) of the first electrical discharge machining ranging from the display position of the starting position to a display position of an interruption position (IA) of the first electrical discharge machining interrupted in response to the interruption request, and
the second drawing control unit redraws on the display device the trajectory of the first electrical discharge machining stored in the storage device, in a manner so that the trajectory of the first electrical discharge machining is superimposed on the machining path that has been redrawn.

3. The control device for the wire electrical discharge machine according to claim 1 or **2,** further comprising a displacement control unit (182) configured to displace the electrode position to an interruption position (IA) of the first electrical discharge machining interrupted in response to the interruption request, after the second electrical discharge machining has been completed,
wherein the storage control unit stores in the storage device the display position of the starting position and the display position of the interruption position, in the case that the interruption request has been made, and
when the electrode position has moved to the interruption position, the second drawing control unit displays on the display device the display position of the interruption position stored in the storage device as the display position of the electrode position, in a manner so that the display position of the interruption position is superimposed on the machining path that has been redrawn.

4. A display method for a wire electrical discharge machine (10) in which an electrical discharge machining is performed on a workpiece (W) by moving a wire electrode (60) relative to the workpiece, the method comprising:
a first drawing step of displaying an electrode position (EP) of the wire electrode present at a starting position (SA) of a machining path (RA) and drawing on a display device (124) the machining path with a display position of the electrode position as a display position of the starting position, before the wire electrical discharge machine performs a first electrical discharge machining on a first workpiece (WA) along the machining path;
a storage step of storing in a storage device (122) the display position of the starting position when the machining path is drawn, in a case that an interruption request for instructing a second electrical discharge machining for a second workpiece (WB) has been made before the first electrical discharge machining is completed; and
a second drawing step of redrawing on the display device the machining path with the display position stored in the storage device as the starting position, in a case that the wire electrical discharge machine restarts the first electrical discharge machining after the second electrical discharge machining has been completed.

5. The display method for the wire electrical discharge machine according to claim **4,** wherein
in the storage step, the display position of the starting position and a trajectory (TA) of the first electrical discharge machining are stored in the storage device in the case that the interruption request has been made, the trajectory of the first electrical discharge machining ranging from the display position of the starting position to a display position of an interruption position (IA) of the first electrical discharge machining interrupted in response to the interruption request, and
in the second drawing step, the trajectory of the first electrical discharge machining stored in the storage device is redrawn on the display device, in a manner so that the trajectory of the first electrical discharge machining is superimposed on the machining path that has been redrawn.

6. The display method for the wire electrical discharge machine according to claim 4 or 5, further comprising a displacement step of displacing the electrode position to an interruption position (IA) of the first electrical discharge machining interrupted in response to the interruption request, after the second electrical discharge machining has been completed,
wherein in the storage step, the display position of the starting position and the display position of the interruption position are stored in the storage device, in the case that the interruption request has been made, and
when the electrode position has moved to the interruption position, in the second drawing step, the display position of the interruption position stored in the storage device is displayed on the display device as the display position of the electrode position, in a manner so that the display position of the interruption position is superimposed on the machining path that has been redrawn.
